# EUROPEAN PATENT APPLICATION

(11) **EP 2 119 844 A2**
(43) Date of publication of application: **18.11.2009**
(21) Application number: 09425171.7
(22) Date of filing: 30.04.2009
(51) Int. Cl.: E04C 1/41

(54) **Thermal insulation brick made of cementious, clay or conglomerate material**

(30) Priority: 14.05.2008 IT VE20080042
(71) Applicant: Pancescu, Vasile Viorel, 00126 Roma (IT)
(72) Inventor: Pancescu, Vasile Viorel, 00126 Roma (IT)

(57) **Abstract**

In a brick made (10,100) made of cement, clay or conglomerate material there is at least a first and a second layer (12,112,16,116) made of cement, clay or conglomerate material and at least a first intermediate layer (14,114) made of insulating material and interposed between said first and second layer.

## Description

The present invention relates to a brick made of cement, clay or conglomerate material used in building constructions such as houses, buildings, and so on.

More precisely, the invention relates to the construction of thermally insulating walls for buildings made of bricks.

It is known that in order to build an insulating wall, first of all, it is necessary to erect a wall of bricks, then to apply insulating boards to the wall, such as a polyurethane board, and finally to cover the insulating board with a second wall of bricks or with wall-boards made of plasterboard.

This technique requires, first of all, the use of several materials, namely materials for building the brick walls, materials for the insulating boards and materials for the wall-boards made of plasterboard. Afterwards, it is necessary to build a brick wall, to shape the insulating boards and to apply them to the brick wall and, finally, to cover the insulating wall with a second wall of bricks or with wall-boards made of plasterboard.

It is evident that the construction time for such a composite wall is long due to the different operations to be executed. Moreover, the final cost is high as a consequence of the costs involved for buying the single products and for the manpower necessary for the various operations.

The aim of the present invention is then to obviate the drawbacks of the above-mentioned prior art, namely to build thermally insulating walls reducing the number of products to be used and the operations to be executed at the building site with consequent advantages both in costs and in time of construction.

This aim is reached by a brick made of cement, clay or conglomerate material, **characterized in that** it comprises at least a first and a second layer made of cement, clay or conglomerate material and at least a first intermediate layer made of insulating material interposed between said first and second layer made of cement, clay or conglomerate material.

In this way, when a wall is erected by using such a kind of brick, the resulting wall is already an insulating wall, and no other operation and/or other construction elements are required.

Preferably, the brick of the invention also comprises a second layer of insulating material coupled to said second layer made of cement, clay or conglomerate material and a third layer made of cement, clay or conglomerate material coupled to said second insulating layer, so as to form a brick having three layers made of cement, clay or conglomerate material and two layers of insulating material interposed between said layers made of cement, clay or conglomerate material.

It is evident that the brick so obtained has remarkable insulating properties and it is suitable to build excellent insulating walls.

These and other advantages of the present invention will be more evident from the following detailed description made for exemplifying but not limiting the purpose with reference to the following drawings wherein:
- figure 1 is a perspective view of a brick according to the present invention;
- figure 2 is a perspective view of a part of the brick of figure 1;
- figure 3 is a perspective view of a brick according to a variant of the invention;
- figure 4 is a perspective view of a brick according to another variant of the invention.

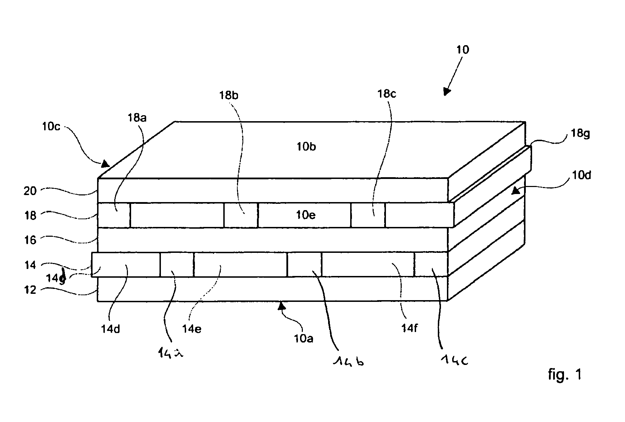

In figure 1 a parallelepipedic brick made of cement, clay or conglomerate material is entirely indicated with 10, the brick has a bottom 10a opposite to a top 10b, a first side wall 10c opposite to a second side wall 10d, and a front wall 10e opposite to a rear wall not visible in the figures.

The brick 10 comprises more layers made of cement, clay or conglomerate material alternated by layers of insulating material, more precisely:
- a first layer 12 made of cement, clay or conglomerate material,
- a first layer 14 of insulating material,
- a second layer 16 made of cement, clay or conglomerate material ,
- a second layer 18 of insulating material ,
- and, finally, a third layer 20 made of cement, clay or conglomerate material,

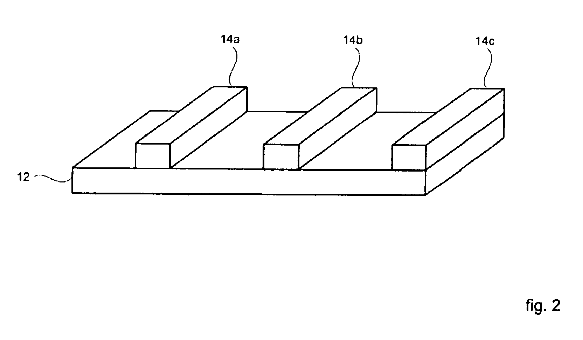

As it can be better noted from figure 2, the first layer 14 of insulating material is composed of three lists 14a,14b,14c made of cement, clay or conglomerate material which start form the front surface 10e and are parallelly arranged with respect to the side walls 10c and 10d. The list 14a is spaced apart from the first side wall 10c, whereas the list 14c is adjacent to the second side wall 10d.

The three lists 14a,14b,14c act as junction elements between the first layer 12 and the second layer 16 made of cement, clay or conglomerate material.

The cavities defined between the first and the second layer 12, 16 of cement, clay or conglomerate material and the lists 14a,14b,14c are filled with insulating material, in particular expanded insulating material such as polyurethane and polystyrene so as to form the insulating layer 14.

Alternatively, the insulating material can be cork or other similar or equivalent material.

In figure 1, cavities 14d,14e,14f are represented just filled with insulating material.

It can be noted that the insulating material which fills the cavity 14d adjacent to the side wall 10c slightly projects, preferably of at least 4mm, thus forming a projection. In this way, when a brick is placed side by side by matching the side walls 10c,10d, the projections are compressed and consequently a good contact between the layer of insulating material of a brick, and that of the following brick, is assured, thus obtaining an optimum insulation.

Similarly, the layer 18 of insulating material is made of three lists 18a,18b,18c of cement, clay or conglomerate material and the cavities defined by them are filled with insulating material. Also in this case the insulating material adjacent to the side wall 10d slightly projects, preferably of at least 4mm, so as to form a projection 18g which assure a good contact with the adjacent brick and thus an optimum insulation.

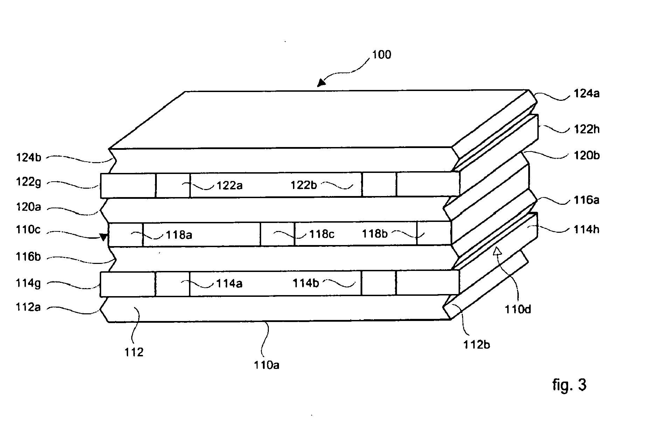

Figure 3 shows a brick 10 according to a variant of the invention wherein the same reference number of the previous figures added to 100 are used in order to indicate the same or similar elements.

The brick 100 is so composed:
- a first layer 112 made of cement, clay or conglomerate material,
- a first layer 114 of insulating material,
- a second layer 116 made of cement, clay or conglomerate material,
- a second layer 118 of insulating material,
- a third layer 120 made of cement, clay or conglomerate material,
- a third layer 122 of insulating material,
- a fourth layer 124 made of cement, clay or conglomerate material,
   for a total of seven layers, four of which made of cement, clay or conglomerate material and three layers of insulating material alternated by each other.

The first and the third layers 114 and 122 of insulating material have two lists 114a,b and 122a,b of cement, clay or conglomerate material spaced apart between them and from the side walls, whereas the second layer 118 of insulating material has two lists 118a,b of cement, clay or conglomerate material placed adjacent respectively to the two side walls 110c,110d, and a third list 118c placed in the central position.

In the layers 114,118,122 of insulating material, the cavities defined by the lists 14a,b, 118a,b,c and 122a,b and by the adjacent layers 112,116,120,124 of cement, clay or conglomerate material are filled with expanded insulating material of the previously indicated kind.

The insulating material of the first layer 114 and of the second layer 122 slightly projects, preferably of at least 4mm, from both the side walls 110c and 110d, thus forming respectively the projections 114g,114h and 122g,122h.

Moreover, the first layer 112 and the third layer 120 of cement, clay or conglomerate material have triangular-shaped projections 112a and 120a projecting from the side wall 110c and triangular-shaped recesses 112b and 120b made at the side wall 110d whose shape corresponds to that of the triangular-shaped projections 112a,120a.

Similarly, the second layer 116 and the fourth layer 124 of cement, clay or conglomerate material have triangular-shaped projections 116a and 124a projecting from the side wall 110d and triangular-shaped recesses 116b and 124b made at the side wall 110c whose shape corresponds to that of the triangular-shaped projections 116a,124a.

In such a way, when the bricks are placed side by side, the triangular-shaped projections 112a,116a,100a,124a fit into the corresponding triangular-shaped recesses 112b,116b,120b,124b of the adjacent bricks.

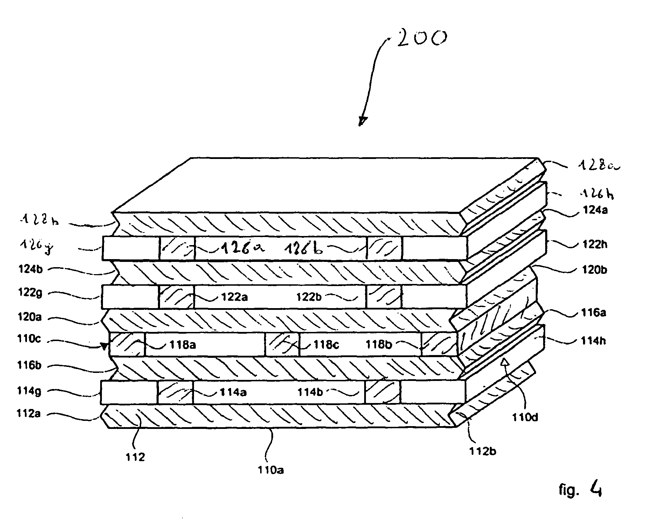

In figure 4 a brick according to another variant of the invention is indicated by reference 200. The brick 200 essentially consists of the brick 100 already described, above which two further layers of material have been added:
- a fourth layer 126 of insulating material,
- a fifth layer 128 made of cement, clay or conglomerate material.

The fourth layer 126 of insulating material has two lists 126a,b of cement, clay or conglomerate material spaced apart between them and from the side walls, whereas the cavities formed by the lists 126a,b are filled with expanded insulating material.

The fifth layer 128 made of cement, clay or conglomerate material has a triangular-shaped projection 128a projecting from the side wall 110d and a triangular-shaped recess 128b made at the side wall 110c whose shape corresponds to that of the triangular-shaped projection 128a.

In such a way by using the brick of the invention it is possible to simply and quickly build thermally insulating walls. Furthermore, thanks to the projections of the insulating material which assure a good thermal joint between the bricks, an optimum thermal insulation is achieved.

Moreover, due to the triangular-shaped recesses and the corresponding triangular-shaped projections of the layers of cement, clay or conglomerate material, the mounting operations and the construction of the walls is remarkably simplified.

It is clear that any conceptual or functional variations or modifications fall inside the scope of the present invention.

For example it is also possible to apply a different number of layers of cement, clay or conglomerate material and of insulation layers spaced apart. In particular, it is possible to use only two layers of cement, clay or conglomerate material and only one layer of insulating material interposed between them.

Or, it is possible to make the brick 10 with a total of five layers, wherein the layers of cement, clay or conglomerate material have projections and recesses at their ends similar to those of the brick 100 which has seven layers.

## Claims

1. A brick (10,100) made of cement, clay or conglomerate material, **characterized in that** it comprises at least a first and a second layer (12,112,16,116) made of cement, clay or conglomerate material and at least a first intermediate layer (14,114) made of insulating material interposed between said first and second layer (12,112,16,116) made of cement, clay or conglomerate material.

2. Brick according to claim 1, **characterized in that** it also comprises a second layer (18,118) of insulating material coupled to said second layer (16,116) made of cement, clay or conglomerate material and a third layer (20,120) made of cement, clay or conglomerate material coupled to said second insulating layer (18,118) so as to form a brick having three layers made of cement, clay or conglomerate material and two layers of insulating material interposed between said layers made of cement, clay or conglomerate material.

3. Brick according o claim 2, **characterized in that** it also comprises a third layer (122) of insulating material coupled to said third layer (120) made of cement, clay or conglomerate material and a fourth layer (124) of cement, clay or conglomerate material coupled to said third layer (122) of insulating material so as to form a brick having four layers of cement, clay or conglomerate material and three layers of insulating material interposed between said layers of cement, clay or conglomerate material.

4. Brick according to any of the previous claims, **characterized in that** said layers (114,118,122) of insulating material comprise junction elements (114a,114b,118a,b,c, 122a,b) of cement, clay or conglomerate material between said two layers of cement, clay or conglomerate material, so as to define cavities which are filled with said insulating material.

5. Brick according to any of the previous claims, **characterized in that** at least one of said layer (14,114) of insulating material has projections (14g, 144g, 144h) at its ends, so that when a brick is placed side by side said projections are compressed thus assuring a good contact and then an optimum insulation.

6. Brick according to any of the previous claims, **characterized in that** at least one of said layers (112,116,120,124) of cement, clay or conglomerate material has a projection (112a,116a,120a,124a) at one end and a corresponding recess (112b,116b,120b,124b) at the opposite end, so that said projection (112a,116a,120a,124a) and said recess (112b,116b,120b,124b) respectively fitted into a recess and a projection of the adjacent bricks.

7. Brick according to any of the previous claims, **characterized in that** said insulating material is an expanded insulating material.

8. Brick according to claim 7, **characterized in that** said expanded insulating material is polyurethane or polystyrene or similar material.

9. Brick according to claim 7, **characterized in that** said insulating material is cork or other insulating material.
